# FASCICULE DE BREVET EUROPEEN

(11) **EP 0 907 938 B1**
(45) Date de publication et mention de la délivrance du brevet: **22.08.2001**
(21) Numéro de dépôt: 97930554.7
(22) Date de dépôt: 19.06.1997
(51) Int. Cl.: G07F 13/02

(54) **Procédé pour le contrôle de la distribution et/ou le paiement du carburant délivré dans une station-service et installation pour la mise en oeuvre de de procédé**
Kontrollverfahren für die Ausgabe und/oder das Bezahlen von bei einer Tankstelle ausgegebenem Kraftstoff und Anlage zur Durchführung des Verfahrens
Method for monitoring the supply of fuel and/or the payment for same at a service station and installation for implementing this method

(30) Priorité: 28.06.1996 FR 9608201
(43) Date de publication de la demande: 14.04.1999
(73) Titulaire: Ordicam Recherche et Développement, 78120 Rambouillet (FR)
(72) Inventeur: MICHOT, Gérard, F-78720 Dampierre (FR); LEGOUX, Jacques, F-91600 Savigny/Orge (FR)
(74) Mandataire: de Saint-Palais, Arnaud Marie
(86) Numéro de dépôt international: FR9701101
(87) Numéro de publication internationale: WO9800817

(56) Documents cités:
- EP-A- 0 358 525
- WO-A-81/02940
- DE-A- 4 013 147
- US-A- 4 199 100
- US-A- 4 967 366

## Description

La présente invention a pour objet un procédé pour le contrôle de la distribution et/ou le paiement du carburant délivré dans une station-service, ainsi que l'installation utilisée pour la mise en oeuvre de ce procédé.

US-A-4 967 366 porte sur un distributeur activé à distance par la transmission d'un code d'identification (PIN).

La présente invention s'applique plus particulièrement mais non exclusivement à la distribution de carburant à des véhicules appartenant à des sociétés de transport routier et qui effectuent des rotations de longue durée (par exemple plusieurs semaines) en dehors de leur base. En effet, dans ce cas, la gestion des frais de carburant devient difficile à assurer par les services comptables qui ne reçoivent les factures qu'au retour des camions à condition que les conducteurs les aient soigneusement conservées.

C'est la raison pour laquelle les sociétés de transport routier passent des accords avec les compagnies pétrolières pour faire en sorte que les montants relatifs aux quantités délivrées soient centralisés au niveau de la compagnie pétrolière et facturés par celle-ci à la société de transport, le conducteur n'ayant qu'à fournir des éléments d'identification (par exemple grâce à une carte d'identification, simple support plastique parfois associé à une piste magnétique) prouvant à la station-service qu'il est habilité à prendre du carburant sur le compte de sa société.

Il s'avère cependant que cette solution, malgré ses avantages, présente de nombreux inconvénients dus principalement à l'impossibilité d'exercer des contrôles suffisants pour éliminer les fraudes.

Ainsi, par exemple, le détenteur d'une carte d'identification pourra utiliser sa carte pour effectuer le plein d'un véhicule privé n'appartenant pas à la société.

De même, le contrôle exercé par le préposé présent à la caisse de la station-service n'intervient qu'à la sortie de la station, c'est-à-dire une fois que le véhicule a fait le plein. Il est alors difficile d'intervenir efficacement, dans le cas où le code d'identification présent sur la carte du conducteur est sur une liste noire.

Pour supprimer ces inconvénients, on a essayé d'équiper les calculateurs associés aux différents groupes de pompes, d'une unité de lecture couplée à un contrôleur de pompe situé habituellement dans le local boutique de la station, ce contrôleur étant alors programmé de manière à procéder aux vérifications nécessaires, avant d'habiliter la pompe à distribuer du carburant.

Toutefois, cette solution s'avère peu efficace puisqu'elle ne permet pas de saisir automatiquement (sans possibilité de falsification) les données relatives au véhicule.

En outre, cette solution ne permet pas de garantir qu'une fois l'habilitation obtenue, l'utilisateur remplisse le réservoir du camion de l'entreprise en compte et non tout autre réservoir ou récipient.

L'invention a donc plus particulièrement pour but de supprimer ces inconvénients.

Elle propose à cet effet un procédé de contrôle et/ou de paiement comprenant :
- préalablement au remplissage du réservoir à partir d'un pistolet de distribution associé à un calculateur, la saisie par une unité réceptrice associée à ce calculateur, de données d'identification relatives au chauffeur et/ou à la société de transport et la transmission à un terminal associé au contrôleur de pompe de ces données d'identification ainsi que de données spécifiques au calculateur, en particulier son numéro, donc sa localisation,
- la vérification, par le contrôleur de pompe ou le terminal, que rien ne s'oppose à la délivrance du carburant, cette vérification s'effectuant par comparaison des données d'identification avec des données détenues par le contrôleur de pompe ou le terminal, en particulier la liste noire, puis la commande par le contrôleur du passage du calculateur, initialement en mode libre service, en mode système,
- dès que le pistolet de la pompe est introduit dans le réservoir, la lecture par un système électronique embarqué à bord du véhicule d'un numéro d'identification contenu dans un module d'identification associé au pistolet puis la transmission par ce système, à destination de la susdite unité réceptrice, de messages comprenant le numéro d'identification, des informations sur le débiteur ainsi qu'éventuellement, les données d'identification des chauffeurs habilités et le kilométrage du véhicule, ladite unité réceptrice transmettant ces messages au contrôleur par l'intermédiaire du susdit terminal et habilitant le calculateur à commencer la distribution,
- la cessation de la distribution, sur ordre du calculateur lorsque ce dernier est avisé par l'unité réceptrice, d'une cessation de lecture du susdit module d'identification indiquant un retrait du pistolet hors du réservoir,
- la fin de la transaction à la suite du raccrochement du pistolet sur la pompe qui déclenche le transfert par le calculateur à destination du contrôleur et du terminal d'informations relatives au volume de carburant délivré et au montant à payer, informations que le terminal peut retransmettre au débiteur.

Avantageusement, la saisie des données d'identification relatives au chauffeur et/ou à la société de transport pourra s'effectuer grâce à une carte à mémoire support d'informations possédée par le chauffeur et un lecteur de carte associé à l'émetteur/récepteur.

De même, le support de données d'identification du pistolet pourra comprendre un circuit intégré de mémoire associé à une bobine et la lecture de ce support par le système électronique embarqué pourra être assurée par un lecteur comprenant une bobine disposée au niveau de l'orifice du réservoir du véhicule en un emplacement tel qu'elle se trouve à proximité de la bobine du support de données d'identification, lorsque le pistolet est engagé dans le réservoir.

Un mode d'exécution d'une installation pour la mise en oeuvre du procédé selon l'invention sera décrit ci-après, à titre d'exemple non limitatif, avec référence aux dessins annexés dans lesquels :
La figure 1 est une représentation schématique permettant d'illustrer le principe du procédé selon l'invention ;
La figure 2 est le schéma d'un dispositif à transmission sans contact utilisable pour l'identification du volucompteur.

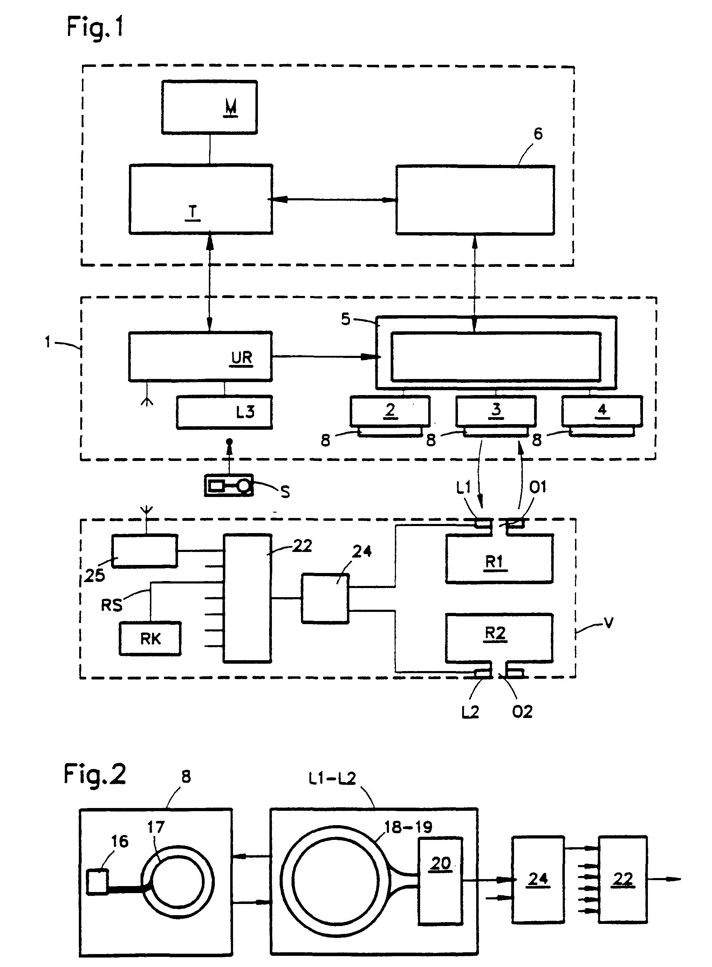

Dans l'exemple représenté sur la figure 1, la station-service comprend, de façon classique, un poste de distribution (bloc 1) comportant un ensemble de trois pistolets de distribution de carburant 2, 3, 4 géré par un calculateur 5 qui affiche notamment les quantités de carburant délivrées ainsi que le montant à payer correspondant et qui transmet ces informations à un contrôleur de pompe 6.

Le calculateur 5 décide de la distribution du carburant. Il est normalement en mode "libre service" mais peut passer en mode "système" après déroulement d'une procédure. Ceci est notamment le cas pour la distribution de carburant en mode de paiement par carte de crédit.

Le contrôleur de pompe 6 consiste en un système électronique localisé dans la station, par exemple à un poste de surveillance ou à la caisse de l'aire marchande de la station. A ce contrôleur 6 est connecté le terminal de paiement ainsi que le terminal système T.

Dans cet exemple, on a indiqué, par un bloc en traits interrompus, un véhicule V en stationnement devant le poste de distribution 1. Ce véhicule V qui peut par exemple consister en un camion, comprend deux réservoirs R₁, R₂ accessibles par deux orifices O₁, O₂ qui débouchent respectivement sur ses deux côtés latéraux.

Conformément à l'invention, chacun de ces orifices O₁, O₂ est équipé d'un dispositif de lecture sans contact L₁, L₂ comprenant, comme indiqué figure 2, une bobine 18, 19 apte à lire des codes d'identification mémorisés dans des modules d'identification 8 équipant chacun des pistolets 2, 3, 4. Ces modules d'identification 8 à lecture/écriture sans contact comprennent par exemple un circuit intégré 16 de petites dimensions connecté à une bobine 17, cet ensemble étant enrobé dans une substance adaptée à cet usage telle que par exemple ABS, PS, verre, époxy, etc...

Le circuit intégré 16 peut comprendre une mémoire inaltérable et inaliénable programmée à l'origine, lors de sa fabrication de manière à pouvoir délivrer un signal d'identification codé. Toutefois, cette mémoire 16 pourrait être téléchargeable (ou reprogrammable) à l'aide de moyens appropriés. L'énergie électrique nécessaire au fonctionnement du circuit intégré est transmise par la bobine d'induction 18 et reçue par la bobine 17 associée au circuit 16. La bobine d'induction 18 sert, lors de la lecture, à transmettre l'énergie à la bobine 16 et à récupérer le signal d'identification émis par le couple circuit-bobine (16 et 17). Le code d'identification utilisé par ce signal est par exemple de douze chiffres. Dans ce cas, on dispose de plusieurs milliards de combinaisons.

Dès que le module d'identification 8 entre dans le champ de la bobine d'induction 18, 19 d'un dispositif de lecture L₁, L₂ du type de ceux équipant les orifices 10, 11 des réservoirs R₁, R₂, le circuit intégré 16 est réveillé. Utilisant l'énergie qui lui est fournie par la bobine 18, 19, il émet sans cesse son code sous la forme d'une modulation du courant circulant dans la bobine 17. Cette modulation est alors captée par la bobine 18, 19 du dispositif de lecture L₁, L₂ puis traitée par un circuit analogique 20. Le signal ainsi traité est ensuite transmis à un processeur central 22 du véhicule V. Ce processeur 22 met notamment en forme le signal pour en extraire le numéro d'identification.

Avantageusement, le module d'identification 8 pourra présenter une forme annulaire et être disposé coaxialement à l'embout du pistolet 2, 3, 4, la bobine 18, 19 du dispositif de lecture L₁, L₂ étant, quant à elle, disposée coaxialement à l'orifice O₁, O₂ du réservoir R₁, R₂. Grâce à cette disposition, en position engagée du pistolet 2, 3, 4 dans l'orifice O₁, O₂ du réservoir R₁, R₂, les deux bobines 17, 18-19 se trouveront disposées coaxialement (et donc parallèlement) l'une par rapport à l'autre et faiblement distante l'une de l'autre. On obtient donc un bon facteur d'induction mutuelle et donc à la fois un bon transfert d'énergie du dispositif de lecture L₁, L₂ au module d'identification 8 et une bonne transmission d'informations du module 8 vers le dispositif de lecture L₁-L₂.

Dans cet exemple, les informations délivrées par les dispositifs de lecture L₁, L₂ sont transmises via le circuit analogique 20 par l'intermédiaire d'un multiplexeur 24, au processeur central 22 dont la mémoire peut contenir une pluralité d'informations telles que des informations d'identification des personnes habilitées à prendre du carburant, du véhicule, de la société de transport, ainsi que d'autres informations pouvant concerner le kilométrage du véhicule, le niveau de carburant, les contrôles techniques, etc...

Les informations relatives au kilométrage sont fournies par un organe de récupération du kilométrage RK qui est branché sur le tachymètre du véhicule et qui est connecté au processeur 22 par l'intermédiaire d'une liaison de type RS 232 ou RS 485.

A partir de ces informations, le processeur élabore un signal S qui est appliqué à un émetteur récepteur HF 25.

Le calculateur 5 est, par ailleurs, connecté à une unité réceptrice UR comprenant, d'une part, un émetteur/récepteur HF accordé sur l'émetteur/récepteur 25 du véhicule V et, d'autre part, un dispositif de lecture L₃ d'un support d'identification S, pouvant par exemple se présenter sous la forme d'une carte à puce à lecture et/ou écriture sans contact. Une telle carte peut comprendre une structure similaire à celle du module d'identification 8.

L'unité réceptrice UR est, quant à elle, reliée à un terminal T physiquement localisé dans la station-service en un emplacement proche du contrôleur de pompe 6 auquel il se trouve relié par une liaison filaire bidirectionnelle.

Le fonctionnement du système précédemment décrit est alors le suivant :

Au cours d'une phase préalable à la distribution de carburant, conformément au procédé selon l'invention, le système doit identifier le chauffeur et/ou le transporteur et/ou le véhicule V et vérifier la qualité d"'ayant droit" du chauffeur, l'habilitant à prendre du carburant sur le compte de sa société.

A cet effet, le chauffeur doit présenter son support d'identification S en regard du dispositif de lecture L₃ pour une lecture sans contact des données d'identification mémorisées dans le support. Les informations lues par le dispositif de lecture L₃ peuvent être de deux ordres, à savoir :
- des informations relatives à un code applicatif spécifique identique sur toutes les cartes, par exemple de 8 bits,
- un numéro d'identification du chauffeur (par exemple 40 bits) dont on garantit l'unicité,
- le numéro matricule du véhicule et, éventuellement, un numéro identifiant le transporteur (une carte permettant une lecture/écriture est alors nécessaire).

Les informations lues par le dispositif de lecture L₃ sont transmises par une liaison filaire bidirectionnelle ou par l'émetteur/récepteur associé à l'unité réceptrice UR, au terminal T de manière à ce que le contrôleur 6 sache de quel calculateur 5 il s'agit et agisse sur ce calculateur 5 pour le faire passer du mode "libre service" dans lequel il se trouvait à un mode "système" propre à la mise en oeuvre du procédé selon l'invention.

Au cours de cette transmission, le terminal T peut procéder à une recherche pour vérifier que le numéro d'identification du chauffeur et/ou du transporteur n'est pas dans une liste noire et que rien ne s'oppose à la délivrance du carburant (principe identique à celui utilisé pour les cartes de crédit).

Si la recherche est positive, le terminal T donne son accord au contrôleur 6 et lui indique le numéro du calculateur 5 concerné. Le contrôleur 6 agit alors sur le calculateur 5 correspondant pour le faire passer du mode libre service au mode système. Les pistolets 2, 3, 4 sous contrôle de ce calculateur ne peuvent plus alors être utilisés en libre service.

Si la recherche est négative, le terminal T informe l'unité réceptrice UR de son refus de délivrer du carburant au demandeur (signal sonore ou visuel).

La phase suivante du procédé consiste en la reconnaissance du véhicule V et du calculateur 5.

Cette phase s'obtient par l'engagement de l'un des pistolets 2, 3, 4 dans le réservoir R₁, R₂ du véhicule V, qui produit un couplage entre la bobine 18-19 du dispositif de lecture L₁-L₂ et la bobine 17 du module d'identification 8.

Les données d'identification lues par le dispositif de lecture L₁-L₂ sont traitées par le processeur central 22 du véhicule V qui élabore un message pouvant par exemple comprendre, en plus du numéro d'identification du calculateur 5 et du numéro d'identification du pistolet, des informations préalablement mémorisées par le transporteur telles que le numéro matricule du véhicule V, les numéros des cartes des chauffeurs autorisés à conduire le véhicule et, éventuellement, des informations relatives à la société, telles que le numéro de téléphone, le numéro de fax auquel le rapport de transaction devra être envoyé, le kilométrage du véhicule fourni par le circuit de récupération du kilométrage RK associé au tachymètre.

Ces messages sont transmis par l'émetteur/récepteur 25 à l'émetteur/récepteur de l'unité réceptrice UR.

Dès que le processeur 22 a fourni à l'émetteur/récepteur 25 les informations à transmettre, celles-ci sont expédiées à l'émetteur/récepteur de l'unité réceptrice UR qui acquitte en informant par radio le processeur 22 qu'il a bien compris le message. Si ce n'est pas le cas, le processeur 22 réémet le message. A la suite de l'acquittement, les transmissions sont interrompues sauf si le pistolet 2, 3, 4 est retiré du réservoir R₁, R₂ et donc si le module d'identification 8 n'est plus lu.

Dans ce cas, le processeur 22 envoie immédiatement le numéro du pistolet 2, 3, 4 à l'unité réceptrice UR qui agit par liaison filaire sur le calculateur 5 pour arrêter la distribution.

Ce choix de n'émettre qu'en cas de retrait du pistolet est notamment dicté par le soin d'économiser l'énergie du véhicule, et surtout de ne pas saturer les ondes par des émissions permanentes de plusieurs véhicules.

En fait, pendant toute la phase opératoire, le processeur central 22 vérifie périodiquement, par exemple vingt-cinq fois par seconde la présence du pistolet 2, 3, 4 dans le réservoir R₁, R₂. A la suite d'un nombre prédéterminé d'absence de lecture, le processeur 22 élabore un ordre de cessation de la distribution qu'il transmet par radio (émetteur récepteur 25) au calculateur 5 qui stoppe la distribution. On obtient un temps de réponse très court entre le moment où se produit la cessation de la lecture du numéro d'identification et l'arrêt de la distribution.

En cas de reprise de la lecture du numéro d'identification, une temporisation permet de reprendre la distribution de carburant sans avoir à recommencer toute la séquence.

La distribution de carburant sous le contrôle du système prend fin lors du raccrochement du pistolet 2, 3, 4. Le calculateur 5 revient alors sous le contrôle du personnel de la station qui pourra remettre le système en libre service à la suite du règlement de la transaction.

Parallèlement, le raccrochement du pistolet 2, 3, 4 marque la fin de la transaction. Le calculateur 5 transmet alors au contrôleur de pompe 6 une information sur le volume de carburant délivré et sur le montant à payer. Le contrôleur 6 communique éventuellement ces informations au terminal T qui les transmet par Modem M ou par tout autre moyen aux entreprises concernées.

Un avantage important du système précédemment décrit consiste en ce qu'il permet à plusieurs véhicules de faire le plein simultanément sur une même station en mode système conformément au procédé selon l'invention.

Ceci est dû notamment au fait que pour être pris en considération par un calculateur 5, un message transmis par l'émetteur/récepteur 25 du véhicule V devra comprendre le numéro d'identification d'un des pistolets sous le contrôle de ce calculateur 5.

A cet effet, les unités réceptrices UR ont toutes en mémoire les numéros d'identification de leurs pistolets.

Quand elles reçoivent un message, ces unités réceptrices UR vérifient avant toute chose, si celui-ci leur est destiné en faisant un contrôle sur le numéro d'identification du pistolet 2, 3, 4. Elles n'agissent sur le calculateur 5 ou sur le terminal T que si elles sont concernées. Grâce à ces dispositions, le système peut fonctionner avec plusieurs calculateurs.

## Revendications

1. Procédé pour le contrôle de la distribution et/ou le paiement du carburant délivré à un véhicule (V) dans une station-service comprenant au moins un groupe de pistolets de distribution (2, 3, 4) associés à un calculateur (5) couplé à un contrôleur de pompe (6),
caractérisé en ce qu'il comprend :
- préalablement au remplissage du réservoir du véhicule (V) à l'aide d'un pistolet (2, 3, 4), la saisie par une unité réceptrice (UR) associée au calculateur (5), de données d'identification relatives au chauffeur et/ou à la société de transport et la transmission à un terminal (T) associé au contrôleur de pompe (6) de ces données d'identification ainsi que de données spécifiques au calculateur (5),
- la vérification, par le contrôleur de pompe (6) ou par le terminal (T), que rien ne s'oppose à la délivrance du carburant, cette vérification s'effectuant par comparaison des données d'identification avec des données détenues par le contrôleur (6), puis la commande par le contrôleur (6) du passage du calculateur (5), initialement en mode libre service, en mode système,
- dès que le pistolet (2, 3, 4) est introduit dans le réservoir (R₁, R₂), la lecture par un système électronique (L₁, L₂) embarqué à bord du véhicule d'un numéro d'identification contenu dans un module d'identification (8) associé au pistolet (2, 3, 4) puis la transmission par ce système, à destination de la susdite unité réceptrice (UR) de messages comprenant le numéro d'identification, des informations sur le débiteur ainsi qu'éventuellement, les données d'identification des chauffeurs habilités et le kilométrage du véhicule, ladite unité réceptrice (UR) transmettant ces messages au contrôleur par l'intermédiaire du susdit terminal (T) et habilitant le calculateur (5) à commencer la distribution,
- la cessation de la distribution, sur ordre du calculateur (5) lorsque ce dernier est avisé par l'unité réceptrice (UR), d'une cessation de lecture du susdit module d'identification (8) indiquant un retrait du pistolet (2, 3, 4) hors du réservoir,
- la fin de la transaction à la suite du raccrochement du pistolet (2, 3, 4) qui déclenche le transfert par le calculateur (5) à destination du contrôleur (6) et du terminal (T) d'informations relatives au volume de carburant délivré et au montant à payer, informations que le terminal peut retransmettre au débiteur.

2. Procédé selon la revendication 1,
caractérisé en ce que les transmissions entre le véhicule (V) et la susdite unité réceptrice (UR) s'effectuent par radio.

3. Procédé selon l'une des revendications 1 et 2,
caractérisé en ce que le module d'identification (8) est de type à lecture et/ou écriture sans contact et comprend un circuit intégré de mémoire connecté à une bobine servant à la fois au transfert de l'énergie nécessaire à son fonctionnement et à la transmission des informations.

4. Procédé selon la revendication 3,
caractérisé en ce que la lecture des données mémorisées dans le module d'identification est assurée par un lecteur (L₁, L₂) comportant une bobine placée au niveau de l'orifice (O₁, O₂) du réservoir (R₁, R₂), en un emplacement tel qu'elle se trouve à proximité de la bobine (17) du module d'identification (8) lorsque le pistolet (2, 3, 4) est engagé dans le réservoir (R₁, R₂).

5. Procédé selon l'une des revendications précédentes,
caractérisé en ce que pour être pris en considération par un calculateur (5), le message transmis par l'émetteur/récepteur (25) du véhicule (V) doit nécessairement comprendre le numéro d'identification d'un des pistolets sous le contrôle de ce calculateur (5).

6. Dispositif pour le contrôle de la distribution et/ou le paiement du carburant délivré à un véhicule (V) dans une station-service comprenant au moins un groupe de pistolets de distribution (2, 3, 4) associés à un calculateur (5) couplé à un contrôleur de pompe (6),
caractérisé en ce qu'il comprend :
- d'une part, au niveau de la station, une unité réceptrice (UR) associée au calculateur (5), un terminal (T) associé au contrôleur de pompe (6) et connecté par une liaison filaire à l'unité réceptrice (UR) et un module d'identification (8) équipant chacun des susdits pistolets (2, 3, 4), et
- d'autre part, au niveau du véhicule (V), un dispositif de lecture sans contact (L₁, L₂) des modules d'identification (8), ce dispositif de lecture (L₁, L₂) équipant l'orifice (O₁, O₂) du réservoir de carburant (R₁, R₂) du véhicule (V), un processeur (22) qui reçoit les informations en provenance du dispositif de lecture (L₁, L₂) et qui compose des messages incluant des informations d'identification du pistolet (2, 3, 4) en provenance du dispositif de lecture (L₁, L₂) ainsi que d'autres informations préalablement mémorisées, et un émetteur/récepteur (25) qui reçoit lesdits messages et qui les transmet à destination d'un récepteur de l'unité réceptrice (UR),
la susdite unité réceptrice (UR) comprenant en outre des moyens de lecture (L₃) de données contenues dans un support d'identification (S) en possession du chauffeur du véhicule.

7. Dispositif selon la revendication 6,
caractérisé en ce que les transmissions entre les susdits émetteurs/récepteurs s'effectuent par radio.

8. Dispositif selon l'une des revendications 6 et 7,
caractérisé en ce que le susdit module d'identification (8) comprend un circuit intégré de mémoire (16) connecté à une bobine (17), et en ce que le dispositif de lecture (L₁, L₂) comprend une bobine (18, 19) placée au voisinage de l'orifice (O₁, O₂) du réservoir (R₁, R₂).

9. Dispositif selon l'une des revendications 6 à 8,
caractérisé en ce que le susdit support d'identification (S) est de type à lecture sans contact.

## Patentansprüche

1. Verfahren zur Steuerung der Abgabe und/oder der Bezahlung des an ein Fahrzeug (V) abgegebenen Kraftstoffs an einer Tankstelle, die mindestens eine Gruppe von Zapfpistolen (2, 3, 4) aufweist, die einem Rechner (5) zugeordnet sind, welcher mit einer Pumpensteuerung (6) verbunden ist,
dadurch gekennzeichnet, daß es folgendes umfaßt:
- vor dem Befüllen des Tanks des Fahrzeugs (V) mit einer Pistole (2, 3, 4) die Erfassung von Identifikationsdaten, die sich auf den Fahrer und/oder auf die Transportgesellschaft beziehen, über eine dem Rechner (5) zugeordnete Empfangseinheit (UR) und die Übertragung dieser Identifikationsdaten an ein der Pumpensteuerung (6) zugeordnetes Terminal (T) sowie spezifischer Daten an den Rechner (5),
- die Überprüfung durch die Pumpensteuerung (6) oder durch das Terminal (T), daß der Kraftstoffabgabe nichts entgegensteht, wobei diese Überprüfung durch Vergleich der Identifikationsdaten mit von der Steuerung (6) gespeicherten Daten erfolgt, anschließend den Befehl von der Steuerung (6) an den Rechner (5), der sich zunächst im freien Betriebsmodus befindet, in den Systemmodus überzugehen,
- sobald die Pistole (2, 3, 4) in den Tank (R₁, R₂) eingeführt ist, das Lesen einer Identifikationsnummer, die in einem der Pistole (2, 3, 4) zugeordneten Identifikationsmodul (8) enthalten ist, durch ein elektronisches System (L₁, L₂), das an Bord des Fahrzeugs untergebracht ist, .anschließend die Übertragung von die Identifikationsnummer enthaltenden Meldungen, Informationen über den Kunden sowie gegebenenfalls der Identifikationsdaten der berechtigten Fahrer sowie des Kilometerstandes des Fahrzeugs durch dieses System an die vorgenannte Empfangseinheit (UR), wobei die Empfangseinheit (UR) diese Meldungen über das vorgenannte Terminal (T) an die Steuerung überträgt und den Rechner (5) berechtigt, mit der Abgabe zu beginnen,
- Beenden der Abgabe auf Befehl des Rechners (5), wenn dieser von der Empfangseinheit (UR) über einen Abbruch des Lesevorgangs des vorgenannten Identifikationsmoduls (8) informiert wird, was auf ein Herausziehen der Pistole (2, 3, 4) aus dem Tank hinweist,
- das Ende der Transaktion infolge des Einhängens der Pistole (2, 3, 4), das die Übertragung von Informationen bezuglich des abgegebenen Kraftstoffvolumens und des zu zahlenden Betrags vom Rechner (5) an die Steuerung (6) und an das Terminal (T) auslöst, wobei das Terminal diese Informationen an den Kunden zurückübertragen kann.

2. Verfahren nach Anspruch 1, dadurch gekennzeichnet, daß die Übertragungen zwischen dem Fahrzeug (V) und der Empfangseinheit (UR) per Funk erfolgen.

3. Verfahren nach einem der Ansprüche 1 und 2, dadurch gekennzeichnet, daß das Identifikationsmodul (8) eines zum kontaktlosen Lesen und/oder Schreiben ist und eine integrierte Speicherschaltung aufweist, die an eine Spule angeschlossen ist, die gleichzeitig zum Transfer der zu seinem Betrieb erforderlichen Energie und auch zur Übertragung der Informationen dient.

4. Verfahren nach Anspruch 3, dadurch gekennzeichnet, daß das Lesen der im Identifikationsmodul gespeicherten Daten durch einen Leser (L₁, L₂) sichergestellt ist, der eine Spule aufweist, die an der Öffnung (O₁, O₂) des Tanks (R₁, R₂) an einer Stelle angeordnet ist, an der sie sich nahe der Spule (17) des Identifikationsmoduls (8) befindet, wenn die Pistole (2, 3, 4) in Eingriff mit dem Tank (R₁,R₂) steht.

5. Verfahren nach einem der vorhergehenden Ansprüche, dadurch gekennzeichnet, daß zur Berücksichtigung durch einen Rechner (5) die vom Sender/Empfänger (25) des Fahrzeugs (V) übertragene Meldung zwingend die Identifikationsnummer einer der von diesem Rechner (5) gesteuerten Pistolen umfassen muß.

6. Vorrichtung zur Steuerung der Abgabe und/oder zur Zahlung des an ein Fahrzeug (V) abgegebenen Kraftstoffs an einer Tankstelle, die zumindest eine Gruppe von Zapfpistolen (2, 3, 4) aufweist, die einem Rechner (5) zugeordnet sind, der mit einer Pumpensteuerung (6) verbunden ist, dadurch, gekennzeichnet, daß sie folgendes umfaßt:
- einerseits an der Tankstelle eine Empfangseinheit (UR), die dem Rechner (5) zugeordnet ist, ein Terminal (T), das der Pumpensteuerung (6) zugeordnet und über eine Drahtverbindung mit einer Empfangseinheit (UR) und einem Identifikationsmodul (8) verbunden ist, mit dem jede der Pistolen (2, 3, 4) versehen ist, und
- andererseits am Fahrzeug (V) eine Vorrichtung (L₁, L₂) zum kontaktlosen Lesen der Identifikationsmodule (8), wobei diese Lesevorrichtung (L₁, L₂) an der Öffnung (O₁, O₂) des Kraftstofftanks (R₁, R₂) des Fahrzeugs (V) angebracht ist, einen Prozessor (22), der die Informationen empfängt, die von der Lesevorrichtung (L₁, L₂) stammen, und der Meldungen erzeugt, die Informationen zur Identifikation der Pistole (2, 3, 4), welche von der Lesevorrichtung (L₁, L₂) stammen, sowie andere zuvor gespeicherte Informationen enthalten, und einen Sender/Empfänger (25), der die Meldungen empfängt und sie an einen Empfänger der Empfangseinheit (UR) überträgt,
wobei die Empfangseinheit (UR) ferner Mittel (L₃) zum Lesen von Daten aufweist, die auf einem Identifikationsmedium (S) im Besitz des Fahrzeugfahrers enthalten sind.

7. Vorrichtung nach Anspruch 6, dadurch gekennzeichnet, daß die Übertragungen zwischen den Sendern/Empfängern per Funk erfolgen.

8. Vorrichtung nach einem der Ansprüche 6 und 7, dadurch gekennzeichnet, daß das Identifikationsmodul (8) eine integrierte Speicherschaltung (16) aufweist, die an eine Spule (17) angeschlossen ist, und daß die Lesevorrichtung (L₁, L₂) eine Spule (18, 19) aufweist, die nahe der Öffnung (O₁, O₂) des Tanks (R₁, R₂) angeordnet ist.

9. Vorrichtung nach einem der Ansprüche 6 bis 8, dadurch gekennzeichnet daß das Identifikationsmedium (S) eines zum kontaktlosen Lesen ist.

## Claims

1. Method for controlling the supply and/or payment of fuel delivered to a vehicle at a service station including at least one set of distribution guns (2, 3, 4) associated with a computer (5) connected to a pump controller (6),
said method comprising the following steps :
- prior to filling of the tank of the vehicle (V) with the aid of a gun (2, 3, 4), the acquisition by a receiving unit (UR) associated with the computer (5) of identification data relating to the driver and/or the transport company and the transmission to a terminal (T) associated with the pump controller (6) of said identification data, as well as data specific to the computer (5),
- the checking by the pump controller (6) or the terminal (T), that everything is in order to deliver fuel, this check being carried out by comparing identification data with data held by the controller (6), then the order by the controller (6) of the computer (5), initially in a free service mode, entering a system mode,
- as soon as the gun (2, 3, 4) is introduced into the tank (R₁, R₂), reading by an electronic system (L₁, L₂) on the vehicle of an identification number contained in an identification module (8) associated with the gun (2, 3, 4) followed by a the transmission by this system, intended for said receiving unit (UR) messages including the identification number, information concerning the payer, as well as possibly identification data of authorised drivers and the distance covered in kilometres of the vehicle, said receiving unit (UR) transmitting these messages to the controller by means of said terminal (T) and authorising the computer (5) to start distribution,
- the halting of distribution, when ordered by the computer (5) when the latter is advised by the receiving unit (UR), of a stopping of reading of said identification module (8) indicating a withdrawal of the gun (2, 3, 4) from the tank.
- the end of the transaction following the placing back of the gun (2, 3, 4) which triggers transfer by the computer (5) intended for the controller (6) and the terminal (T) of information relating to the volume of fuel delivered and an amount to be paid, information which the terminal can retransmit to the payer.

2. Method according to the claim 1,
characterised in that the transmission between the vehicle (V) and said receiving unit (UR) is carried via radio.

3. Method according to one of the claims 1 and 2,
in that the identification module (8) is a standard no-contact reading and/or writing device and includes a storage integrated circuit connected to a coil used for both transferring the energy needed for its functioning and for the transmission of information.

4. Method according to claim 3,
characterised in that the reading of the data stored in the identification module is ensured by a reader (L₁, L₂) comprising a coil placed at the level of the opening (O₁, O₂) of the tank (R₁, R₂) at a location close to the coil (17) of the identification module (8) when the gun (2, 3, 4) is engaged in the tank (R₁, R₂).

5. Method according to one of the preceding claims,
characterised in that so as to be taken into consideration by a computer (5), the message transmitted by a transmitter/receiver (25) of the vehicle (V) includes the identification number of one of the guns under the control of this computer (5).

6. Device for controlling the supply of fuel and/or payment of fuel delivered to a vehicle (V) in a service station including at least one set of distribution guns (2, 3, 4) associated with a computer (5) connected to.a pump controller (6), said device comprising :
- firstly, at the station, a receiving unit (UR) associated with the computer (5), a terminal (T) associated with the pump controller (6) and connected by a wire link to the receiving unit (UR) and an identification module (8) equipping each of said guns (2, 3, 4), and
- secondly, on the vehicle (V), a no-contact reading device (L₁, L₂) for reading identification modules (8), this reading device (L₁, L₂) equipping the opening (O₁, O₂) of the fuel tank (R₁, R₂) of the vehicle (V) a processor (22) receiving the information originating from the reading device (L₁, L₂) and which composes messages including identification information of the gun (2, 3, 4) originating from the reading device (L₁, L₂), as well as other previously stored information, and a transmitter/receiver (25) which receives said messages and which transmits it to a receiver of the receiving unit (UR),
said receiving unit (UR) further including data reading means (L₃) contained in an identification support (S) held by the driver of the vehicle.

7. Device according to claim 6,
characterised in that the transmissions between said transmitters/receivers are carried out via radio.

8. Device according to one of the claims 6 and 7,
characterised in that said identification module (8) includes a storage integrated circuit (16) connected to a coil (17) and in that the reading device (L₁, L₂) includes a coil placed close to the opening (O₁, O₂) of the tank (R₁, R₂).

9. Device according to one of the preceding claims 6 to 8,
characterised in that said identification support (S) is a standard no-contact reading support.
